# EUROPÄISCHE PATENTSCHRIFT

(11) **EP 0 942 620 B1**
(45) Veröffentlichungstag und Bekanntmachung des Hinweises auf die Patenterteilung: **06.08.2008**
(21) Anmeldenummer: 99104748.1
(22) Anmeldetag: 10.03.1999
(51) Int. Cl.: H04Q 11/04

(54) **Verfahren zum Einstellen einer Netzabschlusseinrichtung für den Anschluss an ein digitales oder analoges Kommunikationsnetz**
Method for initializing a network termination equipment for connection to a digital or analog communication network
Méthode d'initialisation d'un dispositif de terminaison de réseau pour la connexion avec un réseau de communication numérique ou analogue

(30) Priorität: 11.03.1998 DE 19810560
(43) Veröffentlichungstag der Anmeldung: 15.09.1999
(73) Patentinhaber: Nokia Siemens Networks GmbH & Co. KG, 81541 München (DE)
(72) Erfinder: Alms, Henrik, 18516 Kreutzmannshagen (DE); Böttcher, Henry, 17489 Greifswald (DE)

(56) Entgegenhaltungen:
- WO-A-98/07292
- WO-A-98/44679
- WO-A-99/39540
- US-A- 5 629 926

## Beschreibung

Digitale Kommunikationsnetze, insbesondere ISDN-Kommunikationsnetze, sind über Netzabschlußeinrichtungen mit Kommunikationsendgeräten verbunden. Beim ISDN-Kommunikationsnetz wird durch die Netzabschlußeinrichtung die kommunikationsendgeräteseitige S0-Schnittstelle an das ISDN-Übertragungsverfahren auf der Anschlußleitung angepaßt. Mit Hilfe des ISDN-Übertragungsverfahrens wird eine bidirektionale Übertragung von Informationen - überwiegend digitalisierte Sprachinformationen - mit einer Übertragungsgeschwindigkeit von 64 kbit/s über eine zweidrähtige Anschlußleitung realisiert, die die Netzabschlußeinrichtung mit einem Kommunikationssystem eines Kommunikationsnetzes verbindet. Als Übertragungsverfahren wird in öffentlichen ISDN-Kommunikationsnetzen überwiegend das Echokompensations-Übertragungsverfahren - in der Fachwelt als UK0-Verfahren bekannt - und in privaten Kommunikationsnetzen das Zeitgetrenntlage-Übertragungsverfahren - in der Fachwelt als UPO-Verfahren bekannt - eingesetzt. Zur übertragungstechnischen Steuerung der Anschlußleitung und der protokollgerechten Steuerung der kommunikationsendgeräteseitigen S0-Schnittstelle ist die Netzabschlußeinrichtung mit einer Digitalnetzeinheit ausgestattet. Für eine Realisierung der Grundfunktionen sowohl in der Netzabschlußeinrichtung als auch im Kommunikationsendgerät kann eine Fernstromversorgung über die Anschlußleitung und über die S0-Schnittstelle zum angeschlossenen Kommunikationsendgerät vorgesehen werden. Üblicherweise ist jedoch eine Stromversorgung in die Netzabschlußeinrichtung integriert, durch die diese mit Energie versorgt wird.

Bei analogen Kommunikationsnetzen werden die zu übermittelnden Informationen - Sprache und Daten - durch analoge Signale über die Anschlußleitung übertragen. Des weiteren wird vom analogen Kommunikationsnetz bzw. von einem analogen Kommunikationssystem eine Fernstromversorgung der an die Anschlußleitung angeschlossenen analogen Kommunikationsendgräte durchgeführt, wobei die Fernstromversorgung für die Grundfunktionen eines analogen Kommunikationsendgerätes - überwiegend die Sprachinformationsübermittlung - dimensioniert ist. Eine spezielle Übertragungstechnik wie beim ISDN-Kommunikationsnetz ist beim analogen Anschluß eines Kommunikationsendgerätes nicht erforderlich, d.h. die Anschlußleitung ist direkt an das Kommunikationsendgerät angeschlossen.

Gemäß der einschlägigen ISDN-Standards, beispielsweise die CCITT-Empfehlung I.430 kann in der Netzabschlußeinrichtung eine Anpassungseinheit vorgesehen werden, mit deren Hilfe eine Anpassung der S0-Schnittstelle an eine analoge Schnittstelle bewirkt wird. Diese Terminaladapter bedeuten einen zusätzlichen Aufwand in den Netzabschlußeinrichtungen.

Des weiteren wird in zunehmendem Maße durch die jeweiligen Teilnehmer eine Umstellung von einer analogen Anschlußleitung in eine ISDN-Anschlußleitung beantragt, d.h. der Teilnehmer schließt anstelle eines analogen Kommunukationsendgerätes ein ISDN-Kommunikationsendgerät an die Anschlußleitung an. Daraufhin ist von dem jeweiligen Netzbetreiber die Anschlußtechnik von analog auf digital umzustellen, d.h. es wird eine Netzabschlußeinrichtung beim Teilnehmer installiert und gleichzeitig ist die Anschlußleitung bzw. das Kommunikationsnetz von Analog-Betrieb auf Digital-Betrieb umzustellen. Diese Umstellung kann nicht immer gleichzeitig erfolgen und führt daher zu erheblichen Einschränkungen bei der Nutzung von Kommunikationsendgeräten. Des weiteren ist ein hoher logistischer und personeller Aufwand für die gleichzeitige Umstellung erforderlich.

Das US Patent 5,629,926 offenbart eine Netzabschlusseinrichtung, die mit dem ISDN-Standard kompatibel ist und mit einem herkömmlichen analogen Telefon verwendet werden kann. Die Netzabschlusseinrichtung besitzt eine ISDN-Schaltung, eine analoge Schaltung sowie eine Schnittstellenerkennungseinheit. Die Schnittstelleneinheit erkennt ein analoges oder ISDN-Netzwerk anhand der von dem Netzwerk bereitgestellten Energie.

Die internationale Anmeldung WO98/44679 offenbart ein Verfahren zur automatischen Erkennung einer Übertragungsmethode und zur Adaptierung eines Endgerätes. Das Kommunikationsnetz ist mit mindestens zwei verschiedenen Übertragungsmethoden, insbesondere Analog- und ISDN-Übertragung, betreibbar. Dazu werden die Charakteristika eines analogen oder eines ISDN-Signals durch Messung erkannt. Insbesondere eine Leerlaufspannung oder eine Phantomspeisung werden gemessen, um eine Analog-Übertragung von einer ISDN-Übertragung zu unterscheiden.

Die internationale Anmeldung WO99/39540 offenbart ein Verfahren zur automatischen Erkennung eines herkömmlichen analogen Telephonsystems. Ein Detektor ist vorgesehen, der die Art der Kommunikationsleitung erfasst und die Kommunikationsvorrichtung entsprechend einrichtet. Die Erfassung erfolgt dadurch, dass zwei auf der Analogverbindung vorliegende Tonwahlfrequenzen erfasst werden.

Die der Erfindung zugrundeliegende Aufgabe ist darin zu sehen, die Umstellung eines analogen in einen digitalen Anschluß zu verbessern. Die Aufgabe wird durch die Merkmale des Patentanspruchs 1 und 4 gelöst.

Der wesentliche Aspekt des erfindungsgemäßen Verfahrens nach Anspruch 1 ist darin zu sehen, daß in der Netzabschlußeinrichtung eine Digitalnetzeinheit für den Anschluß an ein digitales Kommunikationsnetz und Mittel für den Anschluß an ein analoges Kommunikationsnetz vorgesehen sind. Von der in der Netzabschlußeinrichtung angeordneten Digitalnetzeinheit wird nach einem Zuführen von Energie eine Aktivierungsanforderung an das Kommunikationsnetz übermittelt und nach einem Empfang eines Anwortsignals innerhalb einer vorgegebenen Zeitspanne ist ein digitales Kommunikationsnetz erkannt und die Netzabschlußeinrichtung bleibt als Netzabschlußeinrichtung eines digitalen Kommunikationsnetzes eingestellt. Bei keinem Empfang eines Antwortsignals innerhalb einer vorgegebenen Zeitspanne wird ein analoges Kommunikationsnetz erkannt und die Netzabschlußeinrichtung wird als Netzabschlußeinrichtung eines analogen Kommunikationsnetzes eingestellt. Der wesentliche Vorteil des erfindungsgemäßen Verfahrens ist darin zu sehen, daß zu beliebigen Zeitpunkten eine automatische Umschaltung der Art des Anschlusses, d.h. an ein digitales oder analoges Kommunikationsnetz, möglich ist. Die automatische Umschaltung bzw. das Übermitteln einer Aktivierungsanforderung wird vorteilhaft entweder durch das erstmalige Zuführen von Energie an die Netzabschlußeinheiten und/oder durch eine Eingabe an der Netzabschlußeinrichtung (NT) eingeleitet - Anspruch 2, wobei die Eingabe beispielsweise durch eine Tastenbetätigung erfolgt - Anspruch 3.

Der wesentliche Aspekt des erfindungsgemäßen Verfahrens nach Anspruch 4 ist darin zu sehen, daß bei einem digitalen Kommunikationsnetz von diesem eine Aktivierungsanforderung an die Netzabschlußeinrichtung übermittelt wird und in der Netzabschlußeinrichtung nach einem Zuführen von Energie und nach dem Empfang einer Aktivierungsanforderung innerhalb einer vorgegebenen Zeitspanne ein digitales Kommunikationsnetz erkannt ist und die Netzabschlußeinrichtung als Netzabschlußeinrichtung eines digitalen Kommunikationsnetzes eingestellt bleibt. Bei keinem Empfang einer Aktivierungsanforderung innerhalb einer vorgegebenen Zeitspanne wird ein analoges Kommunikationsnetz erkannt und die Netzabschlußeinrichtung wird als Netzabschlußeinrichtung eines analoges Kommunikationsnetzes eingestellt. Der wesentliche Vorteil des erfindungsgemäßen Verfahrens nach Patentanspruch 4 ist wiederum darin zu sehen, daß zu beliebigen Zeitpunkten eine automatische Einstellung der Art des Anschlusses, d.h. an ein digitales oder analoges Kommunikationsnetz, möglich ist. Die automatische Einstellung bzw. das Übermitteln einer Aktivierungsanforderung wird vorteilhaft periodisch oder durch eine Bedienereingabe im digitalen Kommunikationsnetz (ISDN) eingeleitet - Anspruch 5. Bei den in Patentanspruch 1 und 4 beschriebenen Varianten leitet entweder das jeweilige Kommunikationsnetz oder die Netzabschlußeinrichtung eine Einstellung der Netzabschlußeinrichtung ein, wobei das Einleiten der Einstellung der Netzabschlußeinrichtung vorteilhafter d.h. wirtschaftlicher durch die Netzabschlußeinrichtung bewirkt wird. Hierbei wird das erfindungsgemäße Verfahren vorzugsweise nach dem erstmaligen Zuführen von Energie eingeleitet, wobei das erstmalige Zuführen von Energie durch eine Fernspeisung der Netzabschlußeinrichtung oder durch eine lokale Stromversorgung der Netzabschlußeinrichtung bewirkt wird - Anspruch 6. Hierbei kann die lokale Stromversorgung durch eine an das öffentliche Stromversorgungsnetz angeschlossene Stromversorgungseinrichtung oder durch wiederaufladbare Akkumulatoren realisiert sein.

Die Aktivierungsanforderung repräsentiert eine Schicht-1-Meldung zur Aktivierung der Schicht-1-Funktionen in der Netzabschlußeinrichtung bzw. im digitalen Kommunikationsnetz und das Anwortsignal repräsentiert ebenfalls eine Schicht-1-Meldung zur Aktivierungsbestätigung der Schicht-1-Funktion im digitalen Kommunikationsnetz bzw. der Netzabschlusseinrichtung - Anspruch 7. Bei dieser vorteilhaften Ausgestaltung können die bereits für das Aktivieren der Übertragungsstrecke, beispielsweise beim Echokompensations-Übertragungsverfahren eingesetzten Aktivierungs- und Antwortmeldungen benutzt werden, wobei das Übertragungsverfahren um die erfindungsgemäße Auswertung des Empfangs- oder Nichtempfangs von Aktivierungsanforderungen bzw. Aktivierungsmeldungen zu ergänzen ist.

Weitere vorteilhafte Ausgestaltungen des erfindungsgemäßen Verfahrens sind den weiteren Ansprüchen zu entnehmen.

Im Folgenden wird das erfindungsgemäße Verfahren anhand eines Blockschaltbildes und von Ablaufdiagrammen näher erläutert. Dabei zeigen
- Figur 1: in einem Blockschaltbild den Aufbau einer Netzabschlusseinheit,
- Figur 2A und 3A: jeweils in einem Ablaufdiagramm eine Variante des erfindungsgemäßen Verfahrens bei einem Anschluss an ein digitales Kommunikationsnetz, und
- Figur 2B: in einem Ablaufdiagramm eine Variante des erfindungsgemäßen Verfahrens bei einem Anschluss an ein analoges Kommunikationsnetz.

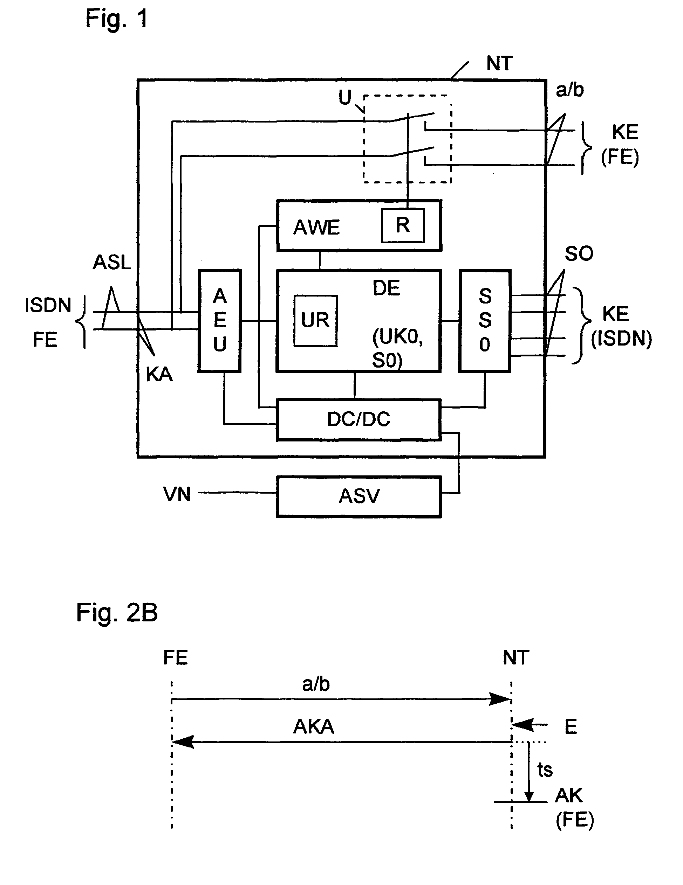

Figur 1 zeigt in einem Blockschaltbild eine Netzabschlusseinrichtung NT, die sowohl für den Anschluss an ein analoges Kommunikationsnetz FE, insbesondere das analoge Fernsprechnetz und für den Anschluss an ein digitales Kommunikationsnetz ISDN, insbesondere das diensteintegrierende digitale Kommunikationsnetz - in der Fachwelt als ISDN-Netz bekannt - ausgestaltet ist.

Für den Anschluss an eines der beiden Kommunikationsnetze FE, ISDN weist die Netzabschlusseinrichtung NT einen zweidrähtigen Kommunikationsanschluß KA auf. Dieser Kommunikationsanschluß KA ist sowohl mit einem Umchalter U als auch mit einer Anschlußeinheit AEU verbunden. Die Anschlußeinheit AEU ist für den Anschluß an ein digitales Kommunikationsnetz ISDN vorgesehen und realisiert den impedanzmäßigen Abschluß des mit einer Anschlußleitung ASL des Kommunikationsnetzes ISDN verbundenen Kommunikationsanschlusses KA, beispielsweise werden mit Hilfe eines Übertragers die elektrischen Eigenschaften an die internen elektrischen Eigenschaften der Netzabschlußrichtung NT angepaßt. Die Anschlußeinheit AEU ist des weiteren mit einer Digitalnetzeinheit DE und einer Spannungsanpassungseinheit DC/DC verbunden. In der Digitalnetzeinheit DE wird die übertragungstechnische Steuerung der Netzabschlußeinrichtung NT mit dem digitalen Kommunikationsnetz ISDN realisiert. Dies bedeutet, daß gemäß dem ISDN-Schichtenmodell die gemäß der Schicht-2 und Schicht-3 strukturierten Meldungen über die in der Netzabschlußeinrichtung NT realisierte Schicht 1 vom digitalen Kommunikationsnetz ISDN empfangen bzw. zu diesem übermittelt werden. Beispielsweise wird als Übertragungsverfahren in digitalen Kommunikationsnetzen das Echokompensations-Übertragungsverfahren eingesetzt - in Figur 1 durch die in Klammern gesetzte Bezeichnung UK0 angedeutet. Die Digitalnetzeinheit DE ist des weiteren mit einer Schnittstelleneinheit SS0 verbunden, durch die die ISDN-Schnittstelle S0 realisiert ist. An diese ISDN-Schnittstelle S0 sind ISDN-Kommunikationsendgeräte KE(ISDN) anschließbar. Die von den ISDN-Kommunikationsendgeräten KE(ISDN) übermittelten Informationen oder an diese zu übermittelnden Informationen werden über die Schnittstelleneinheit SSO an die Digitalnetzeinheit DE und umgekehrt übermittelt. In der Digitalnetzeinheit DE werden die gemäß S0-Schnittstellenprotokoll übermittelten Informationen - überwiegend Sprachinformationen - gemäß dem vorhergehend erläuterten Übertragungsverfahren über die Anschlußleitung ASL an das digitale Kommunikationsnetz ISDN übermittelt.

Sowohl die Schnittstelleneinheit SS0 als auch die Digitalnetzeinheit DE sind an die Spannungsanpassungseinheit DC/DC angeschlossen, wobei durch die Spannungsanpassungseinheit DC/DC die von einem extern an die Netzabschlußeinrichtung NT angeschlossenen Stromversorgungsmodul SVM abgegebene Spannung an die Spannungs- bzw. Pegelerfordernisse der einzelnen Komponenten der Netzabschlußeinheit NT angepaßt wird. Das Stromversorgungsmodul SVM ist mit einem öffentlichen Stromversorgungsnetz VN beispielsweise über die bekannten Steckeinrichtungen verbunden. Im Stromversorgungsmodul SVM wird aus der Wechselspannung des öffentlichen Stromversorgungsnetzes VN für die Versorgung der Netzabschlußeinrichtung NT eine Gleichspannung erzeugt.

Die Digitalnetzeinheit DE ist des weiteren mit einer Auswerteeinheit AWE verbunden, in der ein Relais R angeordnet ist, daß den Umschalter U steuert. Die Gegenseite des Umschalters U ist des weiteren mit einem Anschluß a/b verbunden, an den analoge Kommunikationsendgeräte KE(FE), insbesondere analoge Fernsprechapparate anschließbar sind. Die Auswerteeinheit AWE ist ebenfalls mit der Spannungsanpassungseinheit DC/DC verbunden und wird von dieser nach dem Verbinden des Stromversorgungsmoduls SVM mit dem öffentlichen Stromversorgungsnetz VN mit Energie versorgt. In der Digitalnetzeinheit DE ist des weiteren eine Überwachungsroutine UR implementiert, die zusammen mit der Auswerteeinheit AWE und dem Umschalter U das erfindungsgemäße Verfahren realisiert.

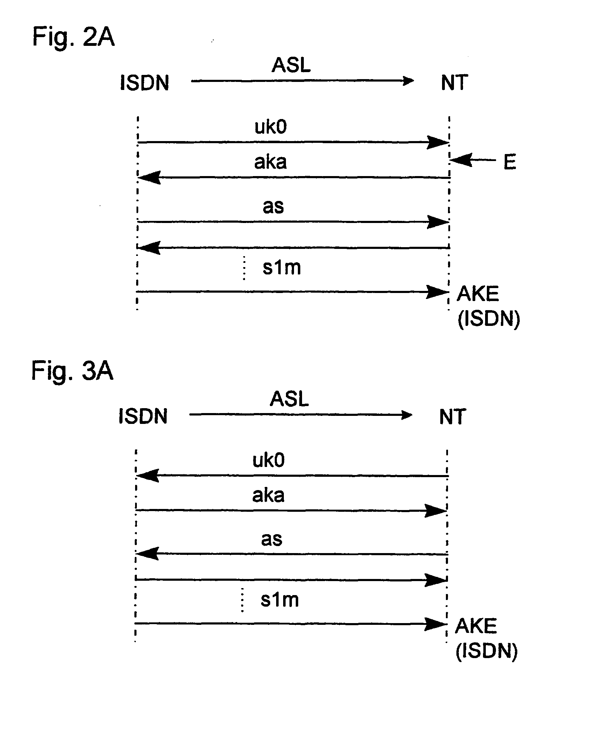

Eine erste Variante des erfindungsgemäßen Verfahrens wird anhand von Figur 2A näher erläutert. In Figur 2A ist durch jeweils eine senkrechte, strichpunktierte Linie das digitale Kommunikationsnetz ISDN und eine Netzabschlußeinrichtung NT repräsentiert. Dies bedeutet, daß die Netzabschlußeinrichtung NT an eine Anschlußleitung ASL eines digitalen Kommunikationsnetzes ISDN angeschlossen ist. Nach dem Zuführen von Energie E - beispielsweise nach dem Anschluß des Stromversorgungsmoduls SVM an das öffentliche Stromversorgungsnetz VN wird von dieser eine Aktivierungsanforderung aka über die Anschlußleitung ASL an das digitale Kommunikationsnetz ISDN übermittelt - das digitale Kommunikationsnetz ISDN ist hierbei durch ein ISDN-Kommunikationssystem repräsentiert. Als Aktivierungsanforderung aka können die bereits in der Schicht 1 verwendeten Meldungen zur Aktivierung der jeweils gegenüberliegenden übertragungstechnischen Einrichtung vorgesehen werden. Die Aktivierungsanforderung aka wird automatisch nach dem Zuführen von Energie E gebildet und an das digitale Kommunikationsnetz ISDN übermittelt. Alternativ kann vorgesehen werden, daß die Aktivierungsanforderung aka erst dann übermittelt wird, sofern die Energie E zugeführt wird und auf der Anschlußleitung ASL eine vom digitalen Kommunikationsnetz ISDN angeschaltete Spannung detektiert wurde - in Figur 2A durch einen mit uk0 bezeichneten Pfeil angedeutet. Anschlie-ßend wechselt die Netzabschlußeinrichtung NT in einen Empfangszustand, d.h. es wird kein weiteres Signal an die Anschlußleitung ASL übermittelt.

Für das Ausführungsbeispiel sei angenommen, daß das digitale Kommunikationsnetz ISDN aktiv ist und als Antwort auf die Aktivierungsanforderung aka ein Antwortsignal as über die Anschlußleitung ASL an die Netzabschlußeinrichtung NT übermittelt. In der Netzabschlußeinrichtung NT wird nach Empfang des Antwortsignals as erkannt, daß sie an ein digitales Kommunikationsnetz ISDN angeschlossen ist und der Aufbau der Schicht 1 weitergeführt wird. Hierzu werden mehrere Schicht-1-Meldungen s1m zwischen dem digitalen Kommunikationsnetz ISDN und der Netzabschlußeinrichtung NT ausgetauscht - in Figur 2A durch mit s1m bezeichnete Pfeile angedeutet. Nach dem Aufbau der Schicht 1 ist die Aktivierung der Netzabschlußeinrichtung NT gelungen - in Figur 2A durch die Bezeichnung AKE (ISDN) angedeutet und im weiteren kann ein Verbindungsaufbau und anschließend ein Informationsaustausch von der S0-Schnittstelle S0 zum digitalen Kommunikationsnetz ISDN durchgeführt werden.

In Figur 2B repräsentieren senkrechte, strichpunktierte Linien jeweils eine Netzabschlußeinrichtung NT und anstelle eines digitalen Kommunikationsnetzes ISDN ein analoges Kommunikationsnetz FE. In der Netzabschlußeinrichtung NT wird wie in Figur 2A eine Aktivitätsanforderung aka von der Netzabschlußeinrichtung NT an das nunmehr analoge Kommunikationsnetz FE übermittelt. Da vom analogen Kommunikationsnetz FE kein Antwortsignal as gesendet werden kann, wird in der Netzabschlußeinrichtung NT nach einer Zeitspanne ts erkannt, daß sie an ein analoges Kommunikationsnetz FE angeschlossen ist. Daraufhin wird von der Überwachungsroutine UR an die Auswerteeinheit AWE eine Mitteilung über den Nichtempfang eines Antwortsignals as gegeben. In der Auswerteeinheit AWE wird daraufhin das Relais R einschließlich des Umschalters U derart gesteuert, daß der zweidrähtige Kommunikationsanschluß KA direkt auf den analogen Kommunikationsabschluß a/b geschaltet wird.

In Figur 3A ist analog zu Figur 2A wiederum in jeweils einer senkrechten, strichpunktierten Linie eine Netzabschlußeinrichtung NT und ein digitales Kommunikationsnetz ISDN dargestellt. Im Unterschied zu Figur 2A wird bei Figur 3A die Aktivierungsanforderung aka vom digitalen Kommunikationsnetz ISDN an die Netzabschlußeinrichtung NT übermittelt, d.h. die Initiative geht vom digitalen Kommunikationsnetz ISDN aus. Hierbei sind zwei Varianten vorstellbar, wobei gemäß einer ersten Variante die Aktivierungsanforderung aka periodisch, beispielsweise minütlich übermittelt wird. Nach einer weiteren Variante kann die Aktivierungsanforderung aka nach Anlegen eines Pegels an die Anschlußleitung ASL bzw. Detektion eines von der Netzabschlußeinrichtung NTE angelegten Pegels - in Figur 3A durch einen mit uk0 bezeichneten Pfeil angedeutet - übermittelt werden. Ansonsten wird die Schicht 1 gemäß wie in Figur 2A erläutert aufgebaut. Nach dem Schicht-1-Aufbau ist die Aktivierung beendet und die Netzabschlußeinrichtung NT als ISDN-Netzabschlußeinrichtung NT eingestellt - in Figur 3A durch die Bezeichnung AKE (ISDN) angedeutet.

Das erfindungsgemäße Verfahren bleibt nicht auf das Ausführungsbeispiel begrenzt, sondern kann mit einer anderen Funktionsaufteilung der Komponenten einer Netzabschlusseinheit NT, mit speziellen Aktivierungsanforderungen aka und Antwortsignalen as und anderen Umschaltern U - beispielsweise elektronischen Umschaltern - sowie Auswerteeinheiten AWE - beispielsweise in die Digitalnetzeinheit DE integriert oder schaltungstechnisch ausgestaltet - realisiert werden.

## Patentansprüche

1. Verfahren zum Einstellen einer Netzabschlusseinrichtung (NT) für den Anschluss an ein digitales oder analoges Kommunikationsnetz (ISDN, FE) ,
wobei in der Netzabschlusseinrichtung (NT) eine Digitalnetzeinheit (DE) für den Anschluss an ein digitales Kommunikationsnetz (ISDN) und Mittel für den Anschluss an ein analoges Kommunikationsnetz (FE) vorgesehen sind, **dadurch gekennzeichnet, dass**
- von der in der Netzabschlusseinrichtung (NT) angeordneten Digitalnetzeinheit (DE) nach einem Zuführen von Energie (E) eine Aktivierungsanforderung (aka) an das Kommunikationsnetz (ISDN,FE) übermittelt wird,
- nach einem Empfang eines Anwortsignals (as) innerhalb einer vorgegebenen Zeitspanne (ts) ein digitales Kommunikationsnetz (ISDN) erkannt ist und die Netzabschlusseinrichtung (NT) als Netzabschlusseinrichtung (NT) eines digitalen Kommunikationsnetzes (ISDN) eingestellt bleibt, und
- bei keinem Empfang eines Antwortsignals (as) innerhalb einer vorgegebenen Zeitspanne (ts) ein analoges Kommunikationsnetz (FE) erkannt ist und die Netzabschlusseinrichtung (NT) als Netzabschlusseinrichtung (NT) eines analogen Kommunikationsnetzes (FE) eingestellt wird.

2. Verfahren nach Anspruch 1, **dadurch gekennzeichnet, dass** eine Aktivierungsanforderung (aka) nach einem erstmaligen Zuführen von Energie (E) und/oder nach einer Eingabe an der Netzabschlusseinrichtung (NT) an das Kommunikationsnetz (ISDN, FE) übermittelt wird.

3. Verfahren nach Anspruch 2, **dadurch gekennzeichnet, dass** die Eingabe durch eine Tastenbetätigung erfolgt.

4. Verfahren zum Einstellen einer Netzabschlusseinrichtung (NT) für den Anschluss an ein digitales oder analoges Kommunikationsnetz (ISDN,FE),
- wobei in der Netzabschlusseinrichtung (NT) eine Digitalnetzeinheit (DE) für den Anschluss an ein digitales Kommunikationsnetz (ISDN) und Mittel für den Anschluss an ein analoges Kommunikationsnetz (FE) vorgesehen sind, bei dem bei einem digitalen Kommunikationsnetz (ISDN) von diesem eine Aktivierungsanforderung (aka) an die Netzabschlusseinrichtung (NT) übermittelt wird,
**dadurch gekennzeichnet, dass**
- in der Netzabschlusseinrichtung (NT) nach einem Zuführen von Energie (E) und
- nach dem Empfang einer Aktivierungsanforderung (aka) innerhalb einer vorgegebenen Zeitspanne (ts) ein digitales Kommunikationsnetz (ISDN) erkannt ist und die Netzabschlusseinrichtung (NT) als Netzabschlusseinrichtung (NT) eines digitalen Kommunikationsnetzes (KN) eingestellt bleibt, und
- bei keinem Empfang einer Aktivierungsanforderung (aka) innerhalb einer vorgegebenen Zeitspanne (ts) ein analoges Kommunikationsnetz (ISDN) erkannt ist und die Netzabschlusseinrichtung (NT) als Netzabschlusseinrichtung (NT) eines analogen Kommunikationsnetzes (KN) eingestellt wird.

5. Verfahren nach Anspruch 4, **dadurch gekennzeichnet, dass** eine Aktivierungsanforderung (aka) periodisch oder durch eine Bedienereingabe im digitalen Kommunikationsnetz (ISDN) über die Anschlussleitungen (ASL) übermittelt wird.

6. Verfahren nach einem der vorhergehenden Ansprüche, **dadurch gekennzeichnet, dass** das erstmalige Zuführen von Energie (E) durch eine Fernspeisung der Netzabschlusseinrichtung (NT) oder durch eine lokale Stromversorgung (SVM) der Netzabschlusseinrichtung (NT) bewirkt wird.

7. Verfahren nach einem der vorhergehenden Ansprüche, **dadurch gekennzeichnet, dass** die Aktivierungsanforderung (aka) eine Schicht-1-Meldung zur Aktivierung der Schicht-1-Funktionen in der Netzabschlusseinrichtung (NT) oder im digitalen Kommunikationsnetz (ISDN) und das Anwortsignal (as) eine Schicht-1-Meldung zur Aktivierungsbestätigung der Schicht-1-Funktion im digitalen Kommunikationsnetz (ISDN) oder der Netzabschlusseinrichtung (NT) repräsentiert.

8. Verfahren nach einem der vorhergehenden Ansprüche, **dadurch gekennzeichnet, dass** die Einstellung als eine Netzabschlusseinrichtung (NT) eines analogen Kommunikationsnetzes (FE) mit Hilfe eines mit Hilfe der Digitalnetzeinheit (DE) und einer Auswerteeinheit (AWE) gesteuerten Umschalters (U) durchgeführt wird, wobei durch den Umschalter (U) ein mit der Anschlussleitung (ASL) verbundener Kommunikationsanschluss (KA) der Netzabschlusseinrichtung (NT) auf einen für den Anschluss von analogen Kommunikationsendgeräten (KE(FE)) vorgesehenen Anschluss (a/b) geschaltet wird.

9. Verfahren nach einem der vorhergehenden Ansprüche, **dadurch gekennzeichnet, dass** bei einer Einstellung als eine Netzabschlusseinrichtung eines digitalen Kommunikationsnetzes (ISDN) mit Hilfe der Digitalnetzeinheit (DE) die übertragungstechnische Steuerung bei der Informationsübermittlung zwischen einem mit der Anschlussleitung (ASL) verbundenen Kommunikationsanschluss (KA) und einer mit digitalen Kommunikationsendgeräten (KE(ISDN)) verbindbaren Schnittstelle (SO) bewirkt wird.

10. Verfahren nach einem der vorhergehenden Ansprüche, **dadurch gekennzeichnet, dass** das analoge Kommunikationsnetz (FE) durch ein analoges Fernsprechnetz (FE) und das digitale Kommunikationsnetz (ISDN) durch ein ISDN-Kommunikationsnetz (ISDN) repräsentiert ist.

## Claims

1. Method for initializing a network termination (NT) for connection to a digital or analogue communication network (ISDN, FE),
wherein a digital network unit (DE) for connection to a digital communication network (ISDN) and means for connection to an analogue communication network (FE) are provided in the network termination (NT), **characterized in that**
- after supplying energy (E), an activation request (aka) is communicated to the communication network (ISDN, FE) by the digital network unit (DE) arranged in the network termination (NT),
- after receiving a response signal (as) within a predetermined time interval (ts), a digital communication network (ISDN) is recognized and the network termination (NT) remains initialized as network termination (NT) of a digital communication network (ISDN), and
- when no response signal (as) is received within a predetermined time interval (ts), an analogue communication network (FE) is recognized and the network termination (NT) is initialized as network termination (NT) of an analogue communication network (FE).

2. Method according to Claim 1, **characterized in that** an activation request (aka) is communicated to the communication network (ISDN, FE) after a first supplying of energy (E) and/or after an input at the network termination (NT).

3. Method according to Claim 2, **characterized in that** the input is made by a push button operation.

4. Method for initializing a network termination (NT) for connection to a digital or analogue communication network (ISDN, FE),
- wherein a digital network unit (DE) for connection to a digital communication network (ISDN) and means for connection to an analogue communication network (FE) are provided in the network termination (NT), in which, in the case of a digital communication network (ISDN), an activation request (aka) is communicated by this to the network termination (NT),
**characterized in that**
- in the network termination (NT), after supplying energy (E), and
- after receiving an activation request (aka) within a predetermined time interval (ts), a digital communication network (ISDN) is recognized and the network termination (NT) remains initialized as network termination (NT) of a digital communication network (KN), and
- when no activation request (aka) is received within a predetermined time interval (ts), an analogue communication network (ISDN) is recognized and the network termination (NT) is initialized as network termination (NT) of an analogue communication network (KN).

5. Method according to Claim 4, **characterized in that** an activation request (aka) is communicated periodically or by an operator input in the digital communication network (ISDN) via the subscriber lines (ASL).

6. Method according to one of the preceding claims, **characterized in that** the first supplying of energy (E) is effected by remote power feeding of the network termination (NT) or by a local power supply (SVM) of the network termination (NT).

7. Method according to one of the preceding claims, **characterized in that** the activation request (aka) represents a layer-1 message for activating the layer-1 functions in the network termination (NT) or in the digital communication network (ISDN) and the response signal (as) represents a layer-1 message for activation acknowledgement of the layer-1 function in the digital communication network (ISDN) or the network termination (NT).

8. Method according to one of the preceding claims, **characterized in that** the initializing as a network termination (NT) of an analogue communication network (FE) is carried out with the aid of a change-over switch (U) controlled with the aid of the digital network unit (DE) and an evaluating unit (AWE), wherein, by means of the change-over switch (U), a communication connection (KA), connected to the subscriber line (ASL), of the network termination (NT) is switched to a connection (a/b) provided for the connection of analogue communication terminals (KE(FE)).

9. Method according to one of the preceding claims, **characterized in that** in the case of an initialization as a network termination of a digital communication network (ISDN), the transmission control during the communication of information between a communication connection (KA) connected to the subscriber line (ASL) and an interface (SO) which can be connected to digital communication terminals (KE(ISDN)) is effected with the aid of said digital network unit (DE).

10. Method according to one of the preceding claims, **characterized in that** the analogue communication network (FE) is represented by an analogue telephone network (FE) and the digital communication network (ISDN) is represented by an ISDN communication network (ISDN).

## Revendications

1. Procédé de réglage d'un dispositif de terminaison de réseau (NT) pour le raccordement à un réseau de communication numérique ou analogique (ISDN, FE), une unité de réseau numérique (DE) pour le raccordement à un réseau de communication numérique (ISDN) et un moyen pour le raccordement à un réseau de communication analogique (FE) étant prévus dans le dispositif de terminaison de réseau (NT), **caractérisé en ce que**
- une demande d'activation (aka) est transmise au réseau de communication (ISDN, FE) par l'unité de réseau numérique (DE) située dans le dispositif de terminaison de réseau (NT) après une alimentation en énergie (E),
- un réseau de communication numérique (ISDN) est détecté après réception d'un signal de réponse (as) dans les limites d'une période de temps (ts) prédéfinie et le dispositif de terminaison de réseau (NT) reste réglé en tant que dispositif de terminaison de réseau (NT) d'un réseau de communication numérique (ISDN) et,
- en cas d'absence de réception d'un signal de réponse (as) dans les limites d'une période de temps (ts) prédéfinie, un réseau de communication analogique (FE) est détecté et le dispositif de terminaison de réseau (NT) est réglé en tant que dispositif de terminaison de réseau (NT) d'un réseau de communication analogique (FE).

2. Procédé selon la revendication 1, **caractérisé en ce qu'**une demande d'activation (aka) est transmise au réseau de communication (ISDN, FE) après une première alimentation en énergie (E) et/ou après une entrée au niveau du dispositif de terminaison de réseau (NT).

3. Procédé selon la revendication 2, **caractérisé en ce que** l'entrée s'effectue par actionnement d'une touche.

4. Procédé de réglage d'un dispositif de terminaison de réseau (NT) pour le raccordement à un réseau de communication numérique ou analogique (ISDN, FE),
- une unité de réseau numérique (DE) pour le raccordement à un réseau de communication numérique (ISDN) et un moyen pour le raccordement à un réseau de communication analogique (FE) étant prévus dans le dispositif de terminaison de réseau (NT), dans lequel, dans le cas d'un réseau de communication numérique (ISDN), celui-ci transmet une demande d'activation (aka) au dispositif de terminaison de réseau (NT),
**caractérisé en ce que**
- dans le dispositif de terminaison de réseau (NT) après une alimentation en énergie (E) et
- après réception d'une demande d'activation (aka) dans les limites d'une période de temps (ts) prédéfinie, un réseau de communication numérique (ISDN) est détecté et le dispositif de terminaison de réseau (NT) reste réglé en tant que dispositif de terminaison de réseau (NT) d'un réseau de communication numérique (KN) et,
- en cas d'absence de réception d'une demande d'activation (aka) dans les limites d'une période de temps (ts) prédéfinie, un réseau de communication analogique (ISDN) est détecté et le dispositif de terminaison de réseau (NT) est réglé en tant que dispositif de terminaison de réseau (NT) d'un réseau de communication analogique (KN).

5. Procédé selon la revendication 4, **caractérisé en ce qu'**une demande d'activation (aka) est transmise, périodiquement ou par une entrée d'un opérateur dans le réseau de communication numérique (ISDN), par le biais des lignes de raccordement (ASL).

6. Procédé selon l'une des revendications précédentes, **caractérisé en ce que** la première alimentation en énergie (E) est réalisée par une alimentation distante du dispositif de terminaison de réseau (NT) ou par une alimentation en courant locale (SVM) du dispositif de terminaison de réseau (NT).

7. Procédé selon l'une des revendications précédentes, **caractérisé en ce que** la demande d'activation (aka) représente un message de couche 1 pour l'activation des fonctions de couche 1 dans le dispositif de terminaison de réseau (NT) ou dans le réseau de communication numérique (ISDN) et le signal de réponse (as) représente un message de couche 1 pour la confirmation d'activation de la fonction de couche 1 dans le réseau de communication numérique (ISDN) ou le dispositif de terminaison de réseau (NT).

8. Procédé selon l'une des revendications précédentes, **caractérisé en ce que** le réglage en tant que dispositif de terminaison de réseau (NT) d'un réseau de communication analogique (FE) est exécuté à l'aide d'un commutateur (U) commandé à l'aide de l'unité de réseau numérique (DE) et d'une unité d'analyse (AWE), un port de communication (KA) du dispositif de terminaison de réseau (NT) relié à la ligne de raccordement (ASL) étant connecté par le commutateur (U) à une borne (a/b) prévue pour le raccordement de terminaux de communication analogiques (KE(FE)).

9. Procédé selon l'une des revendications précédentes, **caractérisé en ce que**, dans le cas d'un réglage en tant que dispositif de terminaison de réseau d'un réseau de communication numérique (ISDN), la commande selon la technique de transmission lors de la transmission d'informations entre un port de communication (KA) relié à la ligne de raccordement (ASL) et une interface (SO) pouvant être reliée à des terminaux de communication numériques (KE(ISDN)) est réalisée à l'aide de l'unité de réseau numérique (DE).

10. Procédé selon l'une des revendications précédentes, **caractérisé en ce que** le réseau de communication analogique (FE) est représenté par un réseau téléphonique analogique (FE) et le réseau de communication numérique (ISDN) est représenté par un réseau de communication ISDN (ISDN).
